# EUROPÄISCHE PATENTSCHRIFT

(11) **EP 1 253 112 B1**
(45) Veröffentlichungstag und Bekanntmachung des Hinweises auf die Patenterteilung: **03.06.2009**
(21) Anmeldenummer: 02007475.3
(22) Anmeldetag: 02.04.2002
(51) Int. Cl.: C01B 13/18, C01B 13/34, C01G 1/02, C01G 49/06, C23G 1/36, F26B 3/12

(54) **Verfahren und Vorrichtung zur Gewinnung von Metalloxiden**
Process and apparatus for recovering metal oxides
Procédé et appareil pour la récupération d'oxydes métalliques

(30) Priorität: 25.04.2001 AT 6612001
(43) Veröffentlichungstag der Anmeldung: 30.10.2002
(73) Patentinhaber: Andritz AG, 8045 Graz (AT)
(72) Erfinder: Lebl, Albert, Dipl.-Ing. Dr., 1170 Wien (AT)
(74) Vertreter: Schweinzer, Friedrich

(56) Entgegenhaltungen:
- WO-A-96/27554
- DE-A- 10 006 990
- US-B1- 6 214 310
- KLADNIG W F: "INDUSTRIELLE OXIDROHSTOFFE HERSTELLUNG NACH DEM ANDRITZ-RUTHNER-SPRUEHROSTVERFAHREN" SPRECHSAAL, VERLAG DES SPRECHSAAL MULLER UND SCHMIDT. COBURG, DE, Bd. 124, Nr. 11 / 12, 1. November 1991 (1991-11-01), Seiten 748-754, XP000272593 ISSN: 0341-0676

## Beschreibung

Die Erfindung betrifft ein Verfahren zur Gewinnung von Metalloxiden aus Metallsalzen dieser Metalle enthaltenden Lösungen, vorzugsweise unter Gewinnung bzw. Rückgewinnung der Säuren, umfassend das Sprührösten der Lösungen, wobei das Sprührösten in zumindest zwei Stufen durchgeführt wird, wobei zumindest einer Verdampfungsstufe zumindest eine Umwandlungsstufe nachfolgt, sowie eine Vorrichtung dazu, umfassend einen Sprühröstreaktor mit zumindest einem Einlass für die Lösung, einem Brenner, einem Abzug für die Säure und einem Austrag für das gebildete Oxid.

Zur Rückgewinnung von Säuren und gleichzeitiger Gewinnung von Metalloxiden werden wässrige Lösungen von Metallverbindungen und Säuren unter anderem durch Sprührösten behandelt, d.h. die Lösungen in einen durch beispielsweise einen oder mehreren Brennern im unteren Bereich beheizten Reaktor eingebracht, vorzugsweise eingesprüht, wo die chemische Umwandlung erfolgt. Ein derartiges Verfahren ist unter dem Namen Andritz-Ruthner-Sprühröstverfahren bekannt. Durch die Wärmeeinwirkung verdampft zuerst die Flüssigkeit, anschließend beginnt die Metallverbindung sich zu zersetzen und in Oxid umzuwandeln. Die Abgase der dampfförmig vorliegenden Säuren werden beispielsweise in einem Zyklon nachgereinigt, einem Venturi gekühlt und dann in Kolonnen ausgewaschen. Das Oxid hingegen wird vom Reaktorboden mittel beispielsweise eines Zellenrades ausgetragen. Aufgrund der kurzen Verweilzeiten bleibt meist ein gewisser Restsäureanteil an das Metall gebunden, der nicht mehr ausreichend entfernt werden kann und als Verunreinigung im Oxid verbleibt. Wenn die Reaktortemperatur so hoch gewählt wird, dass auch größere Tropfen oder solche im Inneren des Sprühkegels noch weitestgehend abgeröstet werden, kommt es an anderen Stellen zu Überhitzung und damit einer Qualitätsverschlechterung des Oxids, insbesonders einer Verkleinerung der spezifischen Oberfläche, wobei typischerweise Werte von nur etwa 2,7 m²/g erreicht werden können. Dies tritt insbesonders im Zusammenhang mit hoher Eisen-Konzentration und der Erzeugung von hochreinem Eisenoxid auf.

In der EP 0 895 962 A1 ist daher ein dem Sprührösten nachfolgendes, separates Nachrösten der Oxide (z.B. Eisenoxid) vorgeschlagen worden. Einem Sprührösten mit kurzer Verweilzeit und in einer Ausgestaltung auch relativ niedriger Temperatur von ca. 500 bis 600 °C schließt sich ein abgetrenntes Nachrösten mit wesentlich längerer Verweilzeit und vorzugsweise ebenfalls niedriger Temperatur von ca. 400 bis 500 °C an. Damit sollen u.a. Oxide mit besonders hoher spezifischer Oberfläche erzeugt werden können. Jedoch ist gerade aufgrund der langen Verweilzeit beim Nachrösten der Durchsatz durch die Anlage auf einem relativ niedrigen Niveau begrenzt und die Anlage ist aufgrund des abgetrennt vorzusehenden Nachröstbereiches auch sehr aufwendig und ausgedehnt.

Die Aufgabe der vorliegenden Erfindung waren daher ein Verfahren sowie eine Vorrichtung zu dessen Durchführung, welche den hohen Durchsatz des reinen Sprühröstens aufrechterhalten können und dennoch Oxide mit der geforderten hohen Qualität, insbesonders einer hohen spezifischen Oberfläche, hervorbringen können. Die Vorrichtung soll dazu noch möglichst kompakt und einfach aufgebaut sein.

Zur Lösung dieser Aufgaben ist das eingangs angegebene Verfahren erfindungsgemäß dadurch gekennzeichnet, dass zumindest eine Verdampfungs- und eine Umwandlungsstufe im gleichen Reaktor erfolgen und der Energieeintrag für die unterschiedlichen Stufen an unterschiedlichen Stellen entlang des Durchganges der Lösung bzw. der Reaktionsprodukte durch den Sprühröstanlage erfolgt, wobei der Energieeintrag in einem Reaktorraum konzentriert wird. Durch die Trennung von Verdampfung der Flüssigkeit und Umwandlung der Metallsalze in die entsprechenden Oxide kann für die Umwandlung die Energiedichte reduziert und dadurch die Oxidqualität verbessert werden. In der Verdampfungs-Stufe wird besonders viel Energie absorbiert ohne die Temperatur wesentlich zu steigern, wobei die Verdampfung der eingesprühten Lösung durch Einsatz von Düsen mit kleiner Tröpfchengröße zusätzlich verbessert werden kann. In der nachfolgenden Umwandlungsstufe kann dann mit niedrigerer und daher insbesonders eine große spezifische Oberfläche bewirkender Temperatur die Oxidbildung erfolgen, ohne ein langwieriges Nachrösten mit langer Verweilzeit und damit geringem Durchsatz zu erfordern. Weiters kann steuerungstechnischer und apparativer Aufwand für die Regelung der Verweilzeit bzw. der zu durchlaufenden Temperaturniveaus in ein- und demselben Volumen vermieden werden.

Gemäß einem weiteren Erfindungsmerkmal werden die Verdampfungsstufen bei Temperaturen von maximal ca. 500 °C durchgeführt. Damit ist gewährleistet, dass in diesen Stufen noch keine wesentliche Umwandlung der Metallsalze in Oxide, sondern überwiegend nur die Verdampfung der Flüssigkeit erfolgt.

Um anschließend eine schonende Umwandlung zu Metalloxiden (z.B. Eisenoxid) mit hoher Qualität, insbesonders hoher spezifischer Oberfläche, durchzuführen, ist gemäß einem weiteren Merkmal der Erfindung vorgesehen, dass die Umwandlungsstufen bei Temperaturen durchgeführt werden, die ca. 50 - 500 °C höher als die Temperaturen der Verdampfungsstufen liegen.

Zur Lösung der genannten Aufgaben ist die eingangs charakterisierte Vorrichtung dadurch gekennzeichnet, dass zumindest zwei entlang des Durchgangsweges der Lösung bzw. der Reaktionsprodukte verteilte Energieeintragsstellen in nur einem Reaktorraum vorgesehen sind. Aufgrund dieser Aufteilung des gesamten Energieeintrages kann die jeweilige Temperatur bzw. der jeweilige Energieeintrag auf die gerade erfolgende Stufe abgestimmt werden, so dass eine lokale Überhitzung mit Qualitätsverlust der gebildeten Oxide, aber auch unvollständige Verdampfung und/oder Säurerückgewinnung mit der Folge der Verunreinigung der Oxide vermieden werden können. Den Energieeintrag aber in einem Reaktorraum konzentriert zu belassen macht einen kompakten Aufbau der Anlage möglich und trägt auch zur raschen Umwandlung bei, die den erwünschten hohen Durchsatz durch die Anlage gewährleistet.

Vorteilhafterweise sind die unterschiedlichen Energieeintragsstellen jeweils durch einen Brenner bzw. eine Brennerebene gebildet, wodurch sich in einfacher und bewährter Weise der Energieeintrag, Luftüberschuss und die Temperatur steuern lassen. In Kombination mit der Auftrennung von Verdampfung und Umwandlung in Oxide kann die Anlage mit dem für die Brenner üblichen Luftüberschuss von ca. 30% betrieben werden und hoher Luftüberschuss von 50 bis 60% wie bei herkömmlichen Verfahren zur Oxidverbesserung notwendig kann vermieden werden. Damit verringert sich aber auch der Staubaustrag in die nachfolgenden Anlagenteile.

Gemäß einer vorteilhaften Ausgestaltung der Erfindung sind in einem Reaktorraum zumindest zwei vorzugsweise vertikal beabstandete Brennerebenen vorgesehen. Damit können ohne weitere Maßnahmen zur Weiterleitung der eingedüsten Lösung und der gebildeten Produkte zumindest zwei Energieeintragsstellen realisiert werden, die sowohl zeitlich als auch bezüglich des Durchgangsweges durch die Anlage hintereinander durchlaufen werden.

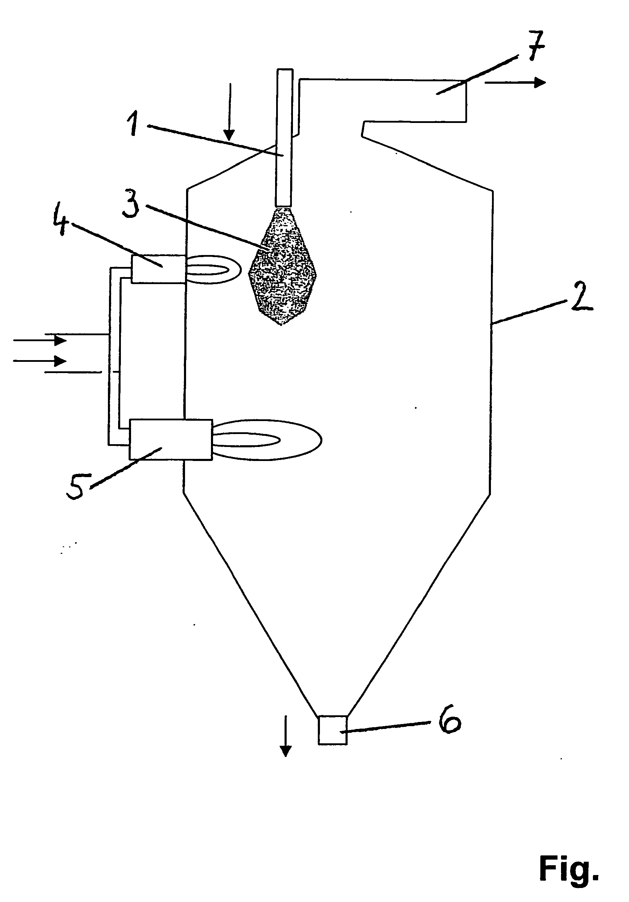

In der nachfolgenden Beschreibung soll die Erfindung anhand eines bevorzugten Ausführungsbeispieles und unter Bezugnahme auf die beigefügte Zeichnung näher erläutert werden. Dabei zeigt die Zeichnungsfigur in schematischer Darstellung einen zur Durchführung des erfindungsgemäßen Verfahrens adaptierten Reaktor mit zwei vertikal beabstandeten Brennerebenen.

Über einen Düsenstock 1, vorzugsweise mit einem Düseneinsatz für kleine Tröpfchengröße, wird im dargestellten Beispiel eine wässrige Lösung von Eisenchlorid und Salzsäure in den Reaktorraum eines Sprühröstreaktors 2 eingedüst. Der Sprühkegel 3 der wässrigen Lösung gelangt zuerst in den Energieeintragsbereich eines im Reaktoroberteil befindlichen ersten Brenners 4, welcher Energieeintragbereich eine Verdampfungszone definiert. Hier erfolgt eine im wesentlichen vollständige Verdampfung der Flüssigkeit unter besonders starker Energieaufnahme, doch ohne wesentliche Temperatursteigerung - und damit ohne wesentliche Oxidbildung. Die Temperatur in dieser Brennerebene wird bei maximal ca. 500 °C liegen.

Anschließend gelangt die verbleibende Lösung in die Umwandlungszone, welche durch einen vertikal unterhalb des ersten Brenners 4 liegenden Hauptbrenner 5 definiert ist, der mit ca. 550 bis 650 °C betrieben wird. In der Umwandlungszone im Reaktorunterteil wird nun aus den Eisenchlorid das Eisenoxid, welches durch das zumindest zweistufige Sprührösten mit sehr hoher Qualität, insbesonders mit sehr hoher spezifischer Oberfläche von bis zu 20 m²/g, vorliegt. Die dem Hauptbrenner 5 gegenüber herkömmlichen einstufigen Sprühröstverfahren entzogene Energie wird in der oberen Verdampfungszone durch den zusätzlichen Brenner 4 wieder zugeführt. Beide Brenner 4, 5 können mit üblichem Luftüberschuss von ca. 30% betrieben werden, was aufgrund der verminderten Luftmenge auch den Austrag von Staub in nachfolgende Anlagenteile vermindert.

Das Eisenoxid, ca. 480 bis 600 °C heiß, wird vom Reaktorboden mittels üblicher Vorrichtungen 6 wie etwa einem Zellenrad ausgetragen, während die Abgase mit den dampfförmigen Säuren über den Abzug 7 mit einer Temperatur von ca. 380 bis 450 °C in einen Zyklon zur Nachreinigung, einen Venturi zur Kühlung und anschließend zum Auswaschen der Säuren in entsprechende Kolonnen geleitet werden. Aufgrund der genannten Abgastemperaturen kommt es durch Zersetzung von dampfförmigem Eisenchlorid (FeCl₃), das bei 305 °C sublimiert und dessen Zerfall ab 324 °C beginnt, zur Eisenoxid (Fe₂O₃) - Aerosolbildung. Da das Eisenchlorid katalytisch bei der Chlorbildung im Reaktor wirkt, führt die Verringerung der Eisenchloridbildung im Venturi auch zu einer Verringerung der Chlorbildung im Reaktor. Dieses Chlor verbleibt dann, auch wegen des - wie oben erläutert - reduzierten Staubübertrages in den Venturikreislauf, im Reaktor.

Bei gleicher Leistung und gleichem Durchsatz wie eine herkömmliche Anlage mit einstufigem Sprühröstreaktor können mit dem erfindungsgemäßen Reaktor der Venturi, die Säurekolonnen, der Abgaswäscher und der Abgasventilator um über 20% geringer dimensioniert werden.

Für andere Metallverbindungen als Eisenchlorid sind die Temperaturbereiche und die erzielbaren Werte für die spezifische Ober fläche in weiten Bereichen variabel. Die gewählten Betriebsparameter für die Verdampfungs- und die Umwandlungszone müssen daher entsprechend gewählt werden.

## Patentansprüche

1. Verfahren zur Gewinnung von Metalloxiden aus Metallsalze dieser Metalle enthaltenden Lösungen, vorzugsweise unter Gewinnung bzw. Rückgewinnung der Säuren, umfassend das Sprührösten der Lösungen, wobei das Sprührösten in zumindest zwei Stufen durchgeführt wird, wobei zumindest einer Verdampfungsstufe zumindest eine Umwandlungsstufe nachfolgt, **dadurch gekennzeichnet, dass** zumindest eine Verdampfungs- und eine Umwandlungsstufe im gleichen Reaktor erfolgen und der gesamte Energieeintrag in einem Reaktorraum konzentriert wird und für die unterschiedlichen Stufen an unterschiedlichen Stellen entlang des Durchganges der Lösung bzw. der Reaktionsprodukte durch die Sprühröstanlage erfolgt.

2. Verfahren nach dem vorhergehenden Anspruch, **dadurch gekennzeichnet, dass** die Verdampfungsstufen bei Temperaturen von maximal ca. 500 °C durchgeführt werden.

3. Verfahren nach einem der vorhergehenden Ansprüche, **dadurch gekennzeichnet, dass** die Umwandlungsstufen bei Temperaturen durchgeführt werden, die ca. 50 - 500 °C höher als die Temperaturen der Verdampfungsstufen liegen.

4. Vorrichtung zur Gewinnung von Metalloxiden aus Metallsalze dieser Metalle enthaltenden Lösungen, vorzugsweise unter Gewinnung bzw. Rückgewinnung der Säuren, umfassend zumindest einen Sprühröstreaktor mit zumindest einem Einlass für die Lösung, einem Brenner, einem Abzug für die Säure und einem Austrag für das gebildete Oxid, **dadurch gekennzeichnet, dass** zumindest zwei entlang des Durchgangsweges der Lösung bzw. der Reaktionsprodukte verteilte Energieeintragsstellen in nur einem Reaktorraum vorgesehen sind.

5. Vorrichtung nach Anspruch 4, **dadurch gekennzeichnet, dass** die unterschiedlichen Energieeintragsstellen durch einen Brenner bzw. eine Brennerebene gebildet sind.

6. Vorrichtung nach Anspruch 5, **dadurch gekennzeichnet, dass** in einem Reaktorraum zumindest zwei vorzugsweise vertikal beabstandete Brennerebenen vorgesehen sind.

## Claims

1. Process for recovery of metal oxides from solutions containing metallic salts of these metals, preferably also extracting and, respectively, recovering the acids, comprising spray roasting of these solutions, where spray roasting is performed in at least two stages, where at least one conversion stage follows at least one evaporation stage, **characterised by** at least one evaporation stage and one conversion stage being located in the same reactor and by the entire energy input being concentrated in a reactor chamber and being carried out at different points along the path taken by the solution or the reaction products through the spray-roasting plant for the various stages.

2. Process according to the preceding Claim, **characterised by** the evaporation stages being implemented at a maximum temperature of approx. 500°C.

3. Process according to one of the preceding Claims, **characterised by** the conversion stages being implemented at temperatures that are approximately 50 to 500°C higher than the temperatures in the evaporation stages.

4. Device for recovery of metal oxides from solutions containing the metallic salts of these metals, preferably also extracting and, respectively, recovering the acids, comprising at least one spray-roasting reactor with at least one inlet for the solution, one burner, an extraction point for the acid and a discharge for the oxide formed, **characterised by** at least two energy input points being provided in only one reactor chamber along the path followed by the solution or the reaction products.

5. Device according to Claim 4, **characterised by** the various energy input points being formed by a burner or a burner level.

6. Device according to Claim 5, **characterised by** at least two, preferably vertically distanced, burner levels being provided in the reactor chamber.

## Revendications

1. Procédé de récupération d'oxydes métalliques à partir des solutions contenant les sels métalliques de ces métaux, préférablement en extrayant, respectivement en récupérant, les acides, comprenant le grillage par pulvérisation de ces solutions, où le grillage par pulvérisation, se fait au moins en deux étapes, où au moins une étape de conversion suit au moins une étape d'évaporation, **caractérisé en ce qu'**au moins une étape d'évaporation et une étape de conversion sont réalisées dans le même réacteur et l'apport d'énergie complet est concentré dans une chambre de réacteur et réalisé à des lieux divers le long du passage de la solution, ou des produits de réaction, à travers l'installation de grillage par pulvérisation, pour les étapes diverses.

2. Procédé selon la revendication précédente, **caractérisé en ce que** les étapes d'évaporation sont réalisées à une température maximale d'environ 500°C.

3. Procédé selon l'une des revendications précédentes, **caractérisé en ce que** les étapes de conversion sont réalisées à des températures plus hautes d'environ 50 à 500°C que les températures des étapes d'évaporation.

4. Dispositif de récupération d'oxydes métalliques à partir des solutions contenant les sels métalliques de ces métaux, préférablement en extrayant, respectivement en récupérant, les acides, comprenant au moins un réacteur de grillage par pulvérisation avec au moins une entrée pour la solution, un brûleur, un point d'extraction de l'acide et une décharge pour l'oxyde qui se forme, **caractérisé en ce qu'**au moins deux points d'apport d'énergie sont prévus dans une seule chambre de réacteur le long du passage de la solution, ou des produits de réaction.

5. Dispositif selon la revendication 4, **caractérisé en ce que** les points divers d'apport d'énergie se forment par un brûleur ou un niveau brûleur.

6. Dispositif selon la revendication 5, **caractérisé en ce qu'**au moins deux niveaux brûleur sont prévus dans la chambre de réacteur, ces niveaux étant préférablement verticalement espacés.
